# EUROPEAN PATENT SPECIFICATION

(11) **EP 3 300 825 B1**
(45) Date of publication and mention of the grant of the patent: **07.07.2021**
(21) Application number: 16191017.9
(22) Date of filing: 28.09.2016
(51) Int. Cl.: B27M 3/00

(54) **A THREAD FORMING TOOL**
GEWINDEFORMUNGSWERKZEUG
OUTIL DE FILETAGE

(43) Date of publication of application: 04.04.2018
(73) Proprietor: WALTER AG, 72072 Tübingen (DE)
(72) Inventor: Bihrer, Martin, DE-777 36 Zell am Harmersbach (DE)
(74) Representative: Sandvik

(56) References cited:
- EP-A2- 1 867 421
- WO-A1-2013/080293
- WO-A1-2013/186165
- US-A- 2 787 798
- US-A- 4 491 002
- US-B1- 6 217 267

## Description

### TECHNICAL FIELD OF THE INVENTION

The present invention relates to a thread forming tool for forming an internal thread in a metal workpiece, according to the preamble of claim 1. Such a thread forming tool is known from the document US 6 217 267 B1.

### BACKGROUND OF THE INVENTION AND PRIOR ART

There are different types of thread forming tools for forming an internal thread in a metal workpiece, i.e. tools for creating a thread without any material-removing action, such as cutting or chip-removing machining.

In one type of a non-cutting thread forming tool, the thread forming portion is provided with a screw thread in the shape of a circumferential spiral. In other words the thread forming profiles and thread grooves are arranged along helix-shaped paths around the common axis of the tool. The process of forming an internal thread in a workpiece using such a tool normally involves inserting the tool into an already existing bore, while rotating the tool around its central axis, and moving the tool axially forwardly. Thereby, the thread forming profiles will be pressed into the surface of the workpiece, causing a re-shaping or deformation of the workpiece material so that a screw thread is formed.

Thread forming tools for producing an internal thread in a metal workpiece, in particular the thread forming profiles thereof, are subjected to severe stress and a high degree of wear. Also, such known thread forming tools are subjected to high temperatures.

### SUMMARY OF THE INVENTION

An object of the present invention is to provide a thread forming tool having improved machining performance. A further object is to provide a thread forming tool with improved wear resistance characteristics. A still further object is to provide a thread forming tool, which enables reducing the torque needed to form an internal thread in a workpiece. A further object is to provide a thread forming tool having a longer service life. Yet a further object is to provide a thread forming tool having improved supply of cooling and/or lubricating fluid.

At least the main object is achieved with the initially defined thread forming tool, which is characterized in that the flanks of at least one first thread groove encloses a first angle, which is smaller than a second angle enclosed by the flanks of at least one second thread groove. The smaller angle can be realized by changing the angle of inclination for one or both flanks of said first thread groove. Since at least one of the flanks of the first thread groove is inclined at another angle, the associated thread forming profile will have a sharper configuration, i.e. the two flanks of the associated thread forming profile will together form a smaller angle. Accordingly, compared with tools having thread grooves enclosing equal angles along the thread forming portion, the at least one first thread groove enables thread forming action using less force. Surprisingly, this leads to reduced wear not only for the associated thread forming profiles, but for the entire tool. Further, the torque needed to form an internal thread in a workpiece is reduced. Also, when using cooling and/or lubricating fluid, said first thread groove allows for advantageous transportation of such fluid closer to the thread forming ridges of associated thread forming profiles.

According to an embodiment of the invention said first angle is at least 10° smaller than said second angle.

According to an embodiment of the invention said first angle is at least 20° smaller than said second angle.

According to an embodiment of the invention the flanks of said at least one first thread groove are inclined at equal angles. This allows for advantageous production of the at least one first thread groove. For example, a normal grinding wheel with equal inclination on both sides can be used for production.

According to an embodiment of the invention the profile depth of said at least one first thread groove is larger than the profile depth of the at least one second thread groove. Such a configuration allows for even larger flow of material in the radial direction during thread forming operations.

According to an embodiment of the invention a first set of thread grooves, having a plurality of first thread grooves, and a second set of thread grooves, having a plurality of second thread grooves, are arranged. This is advantageous in that it allows for further wear reduction, further torque reduction and further improved cooling and/or lubricating fluid transportation.

According to an embodiment of the invention the first thread grooves are longitudinally evenly distributed along at least a part of the thread forming portion. An even distribution of the first thread grooves results in a more even wear distribution on the tool, which improves the reliability of the tool.

According to an embodiment of the invention the first thread grooves are longitudinally evenly distributed along a major part of the thread forming portion. This gives a further even wear distribution on the tool.

According to an embodiment of the invention the first thread grooves are arranged at a longitudinally forward end section of the thread forming portion. An advantageous effect of such an arrangement is that it allows for an easier entry into the workpiece, i.e. not as much force or torque is needed when the thread forming profiles associated with the first thread grooves engage the workpiece.

According to an embodiment of the invention the first thread grooves are arranged at a longitudinally rear section of the thread forming portion. This arrangement enables thread forming action using less force, with reduced wear, especially for the associated thread forming profiles at the rear section. Further, the torque needed to form an internal thread in a workpiece is reduced. Also, when using cooling and/or lubricating fluid, said first thread groove allows for advantageous transportation of such fluid closer to the thread forming ridges, especially at the associated thread forming profiles at the rear section.

According to an embodiment of the invention the first thread grooves are longitudinally evenly distributed along the full length of the thread forming portion. Such a configuration results in a yet further even wear distribution on the tool.

According to an embodiment of the invention the first thread grooves are longitudinally evenly distributed such that every second groove is a first thread groove. Tests have shown that this arrangement results in an advantageous wear reduction of the thread forming tool.

According to an embodiment of the invention at least five or more thread forming profiles and thread grooves are arranged at each lobe portion. Hereby, a more efficient thread forming is achieved.

According to an embodiment of the invention at least ten or more thread forming profiles and thread grooves are arranged at each lobe portion. Hereby, an even more efficient thread forming is achieved.

According to an embodiment of the invention adjacent thread forming lobe portions and associated relief portions are circumferentially spaced-apart at equal angles. This configuration results in a uniform mass distribution and a well-balanced tool.

According to an embodiment of the invention the thread forming profiles and thread grooves are arranged along helix-shaped paths around the common axis.

### DESCRIPTION OF THE DRAWINGS

The present invention will now be explained in more detail by a description of different embodiments of the invention and by reference to the accompanying drawings.
- Fig. 1: is a side view of a thread forming tool according to a first embodiment.
- Fig. 2: is a cross-section along the line II-II in Fig. 1.
- Fig. 3: is a partial section view of thread forming profiles and thread grooves of the thread forming tool shown in Fig. 1.
- Fig. 4: is a side view of the thread forming portion of the thread forming tool in Fig. 1
- Fig. 5: is a side view of the thread forming portion of a thread forming tool according to a second embodiment.
- Fig. 6: is a side view of the thread forming portion of a thread forming tool according to a third embodiment.

### DETAILED DESCRIPTION OF EMBODIMENTS OF THE INVENTION

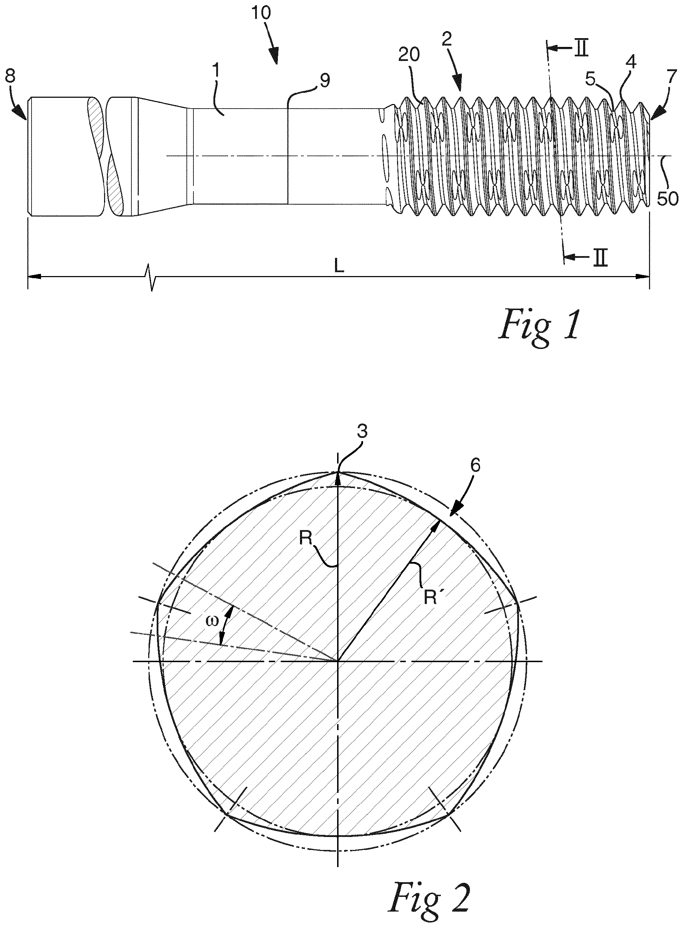

Reference is made to Fig. 1, which shows a side view of a thread forming tool 10 for forming an internal thread in a metal workpiece, i.e. for creating a thread inside a hole without any material-removing action, according to a first embodiment. The thread forming tool 10 comprises a shank 1 and a thread forming portion 2, which are rotatable around a common axis 50. The axis 50 extends in a longitudinal direction of the thread forming tool 10. The shank 1 is arranged at a rear part of the thread forming tool 10, whereas the thread forming portion 2 is arranged at a forward part of the thread forming tool 10. The thread forming tool has a front end 7 and a rear end 8, the distance in the longitudinal direction between the front end 7 and the rear end 8 being the full length L of the thread forming tool 10. The thread forming portion 2 is fixedly connected to the shank 1. More specifically, the thread forming portion 2 and the shank 1 are made in one piece of material. The thread forming tool 10 is preferably made of high speed steel or cemented carbide. The surface of the thread forming tool 10 may be treated using any known treatment process to achieve desired properties. For example, the thread forming tool 10 may be heat-treated or surface hardened. Further, the surface of the thread forming tool 10 may be coated with a coating, such as TiN (Titanium nitride) or TiCN (Titanium carbonitride) or TiAIN (Titanium aluminum nitride), along a part or the full length of the tool. In the embodiment in Fig. 1, the forward part of the tool 10 to the right of line 9 is coated, whereas the rear part of the tool 10 to the left of line 9 is uncoated.

The shank 1 is, at its rear part, adapted to be connected, directly or in-directly, to a rotatable machine tool spindle. In the embodiment shown in Fig. 1, the shank is cylindrical, i.e. has a circular or annular cross-section. In addition, the shank may be provided with one or more flat portions for transmitting the torque from the machine tool spindle. Alternatively, or in addition, the shank may be provided with an external or internal thread. In other embodiments, the shank 1 may be of non-circular cross-section, for example hexagonal, octagonal or other suitable shape.

Fig. 2 is a transverse cross-section along the line II-II in Fig. 1, i.e. a cross-section perpendicular to the axis 50. Thus, Fig. 2 shows a cross-section of the thread forming portion 2, which has a plurality of radially protruding lobe portions 3 being circumferentially spaced-apart by relief portions 6, i.e. the lobe portions 3 and the relief portions are alternately arranged in the circumferential direction of the tool 10. Accordingly, the thread forming portion 2 has a non-circular cross-section. The radius R of the lobe portions 3 is larger than the radius R' of the relief portions 6. In other words, the lobe portions 3 define high points, whereas the relief portions are lower portions in relation to said lobe portions. The relief portions 6 have a generally convex or arcuate shape. Also, the lobe portions 3 have a generally convex or arcuate shape. However, the radius of curvature for the lobe portions is smaller than the radius of curvature for the relief portions. Thereby, the lobe portions 3 have a more pointed or sharp configuration, as is apparent from Fig. 2. Further, according to the embodiment shown in Fig. 2, the thread forming portion 2 has a generally polygonal cross-section, more specifically, a pentagonal cross-section with five radially protruding lobe portions 3 and five relief portions 6, which are adjacent to said lobe portions. Thus, the lobe portions 3 form corners and the relief portions 6 form outwardly arched sides of this generally pentagonal cross-section. Other embodiments include less than five lobe portions, e.g. three or four lobe portions. Yet other embodiments include more than five lobe portions, e.g. six, seven or eight lobe portions, or sixteen lobe portions.

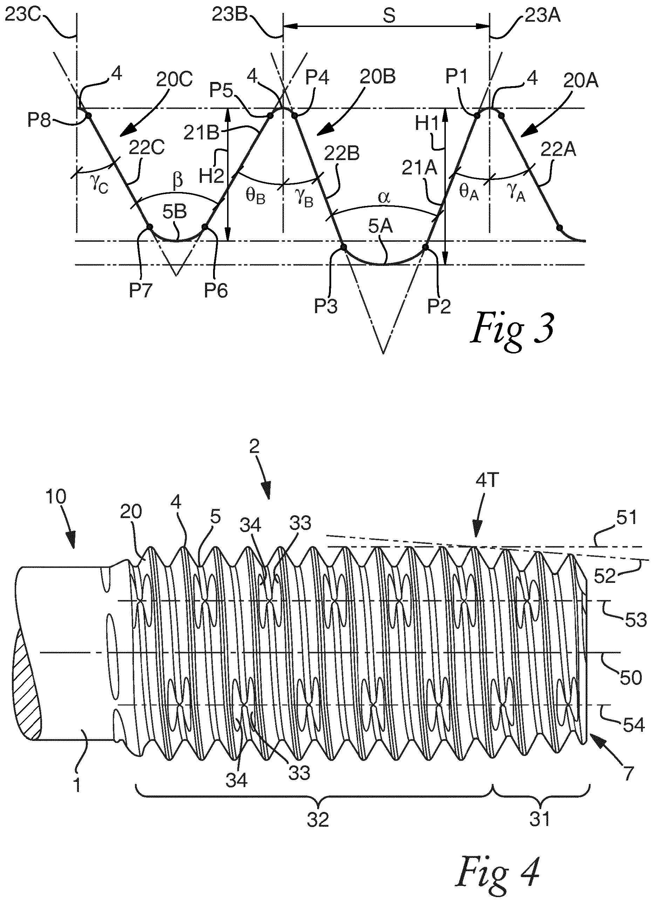

Adjacent thread forming lobe portions 3 and associated relief portions 6 are circumferentially spaced-apart at equal angles. Thus, in the present embodiment adjacent thread forming lobe portions 3 are circumferentially spaced-apart, or spaced-apart at an angular interval, by 72°. Consequently, adjacent relief portions 6 are also equi-angularly spaced-apart by 72°. Preferably, the lobe portions 3 and the relief portions 6 extend in the longitudinal direction along the full length of the thread forming portion 2, i.e. from the front end 7 to the rear end of the thread forming portion. Furthermore, each lobe portion extends in the longitudinal direction along a straight path 53, 54 that is parallel to the axis 50, as illustrated in Fig. 4. Consequently, also the relief portions 6 extend in the longitudinal direction in parallel with the axis 50. As is apparent from Fig. 2, the width or circumferential extension of the lobe portions 3 is smaller than the width or circumferential extension of the relief portions 6.

In the longitudinal direction of the thread forming tool 10, the thread forming portion 2 includes a plurality of thread forming profiles 20 and thread grooves 5. Generally, two adjacent thread forming profiles 20 are connected via a thread groove 5 located therebetween. The thread forming profiles 20 and thread grooves 5 are arranged along helix-shaped paths around the common axis 50. In other words, the thread forming profiles and thread grooves run in the shape of a spiral around the axis 50. Accordingly, the lobe portions 3 have in the longitudinal direction a plurality of thread forming profiles 20 and a plurality of thread grooves 5. Also, the relief portions 6 have in the longitudinal direction a plurality of thread forming profiles 20 and a plurality of thread grooves 5. The number of thread forming profiles and thread grooves can be configured based on user requirements. According to one embodiment at least five or more thread forming profiles 20 and thread grooves 5 are arranged at each lobe portion 3. According to another embodiment at least ten or more thread forming profiles 20 and thread grooves 5 are arranged at each lobe portion 3. According to the embodiment illustrated in Fig.1 and Fig. 4, at the visible lobe portions 3, as indicated by straight paths 53, 54, fifteen thread forming profiles 20 and fourteen thread grooves 5 are arranged.

In the embodiment shown in Fig. 4, the helix-shaped paths, along which the thread forming profiles 20 and thread grooves 5 extend, are uninterrupted. Thus, there are no interruptions in the helix-shaped paths in the circumferential direction or in the longitudinal direction of the tool 10. Further, the helix-shaped paths intersect the front end 7 of the thread forming portion 2. Said helix-shaped paths end at the rear end of the thread forming portion 2, where the thread forming portion 2 transitions into the shank 1. According to other embodiments, the thread forming tool 10 may be provided with one or more flutes, straight or helical, which extend in the longitudinal direction and, consequently, interrupt said helix-shaped paths in the circumferential direction. Preferably, such flutes are arranged on the relief portions.

Referring to Fig. 3, which is a partial longitudinal section view of thread forming profiles 20 and thread grooves 5 of the thread forming tool shown in Fig. 1, each thread forming profile 20 has a radially outermost ridge 4. Each ridge 4 is connected to a first flank 21 and a second flank 22. The first flank 21 is a rear flank, which is a left flank in Fig. 3, whereas the second flank 22 is a forward flank, which is a right flank in Fig. 3. The two flanks 21, 22 of a thread forming profile 20 diverge from each other radially inwards, i.e. downwards in Fig. 3. In the embodiment shown in Fig. 3, the ridges 4 are shaped as having a ridge radius, i.e. the ridges are convex or outwardly arched. The radius of curvature of ridge 4 may be configured to achieve advantageous flow of the workpiece material, when forming a thread in a workpiece using the thread forming tool 10. In other embodiments, one or more of the ridges may be configured to be essentially flat. Since the thread forming profiles 20 and thread grooves 5 are arranged along helix-shaped paths around the common axis 50, it follows that the ridges 4 and the flanks 21, 22 also run along helix-shaped paths around the common axis 50.

In Fig. 3, from right to left, three thread forming profiles 20A, 20B, 20C are shown. A first flank 21A of a first thread forming profile 20A is connected to a second flank 22B of an adjacent second thread forming profile 20B via a first thread groove 5A. Further, a first flank 21B of said second thread forming profile 20B is connected to a second flank 22C of an adjacent third thread forming profile 20B via a second thread groove 5B.

The flanks 21A, 22B of the first thread groove 5A encloses a first angle a, i.e. the two flanks 21A, 22B of the first thread groove 5A together form a first angle a. In other words, these two flanks 21A, 22B diverge from each other radially outwards, i.e. upwards in Fig. 3, at an angle a. The flanks 21B, 22C of the second thread groove 5B encloses a second angle β, i.e. the two flanks 21B, 22C of the second thread groove 5B together form a second angle β. In other words, these two flanks 21B, 22C diverge from each other radially outwards, i.e. upwards in Fig. 3, at an angle β. The first angle α is smaller than the second angle β. The difference between the first angle α and the second angle β can be configured based on user requirements. According to one embodiment the first angle α is at least 10° smaller than the second angle β. According to another embodiment the first angle α is at least 20° smaller than said second angle β. In the embodiment shown in Fig. 3, the first angle α is 40° and the second angle β is 60°. Thus, the first angle α is 20° smaller than the second angle β.

In the embodiment illustrated in Fig. 3, the flanks 21B, 22C of the second thread groove 5B are inclined at equal angles θ_{B},γ_{C}. More specifically, the first flank 21B of the second thread forming profile 20B intersects a plane 23B, which is perpendicular to the axis 50 and intersects the ridge 4 of the second thread forming profile 20B, at an angle θ_{B}. The second flank 22C of the third thread forming profile 20C intersects a plane 23C, which is perpendicular to the axis 50 and intersects the ridge 4 of the third thread forming profile 20C, at an angle γ_{C}. Thus, while the flanks 21B, 22C of the second thread groove 5B diverge radially outwards, i.e. the flanks 21B, 22C are inclined in different directions away from each other, the amount of inclination is the same for both flanks such that θ_{B} = γ_{C}. Accordingly, since the flanks 21B, 22C of the second thread groove 5B enclose an angle of 60°, using simple trigonometry gives θ_{B} = γ_{C} = β /2 = 30°.

According to different embodiments, the difference between the first angle α and the second angle β can be realized by changing the angle of inclination for only one or both flanks of the first thread groove 5A, in relation to the angle of inclination for the flanks of the second groove 5B. In the embodiment illustrated in Fig. 3, the flanks 21A, 22B of the first thread groove 5A are inclined at equal angles θ_{A},γ_{B}. More specifically, the first flank 21A of the first thread forming profile 20A intersects a plane 23A, which is perpendicular to the axis 50 and intersects the ridge 4 of the first thread forming profile 20A, at an angle θ_{A} The second flank 22B of the second thread forming profile 20B intersects the plane 23B, which is perpendicular to the axis 50, at an angle γ_{B}. Thus, while the flanks 21A, 22B of the first thread groove 5A diverge radially outwards, i.e. are inclined in different directions away from each other, the amount of inclination is the same for both flanks such that θ_{A} = γ_{B}. Accordingly, since the flanks 21A, 22B of the first thread groove 5A enclose an angle a of 40°, using simple trigonometry gives θ_{A} = γ_{B} = a/2 = 20°. Thus, the inclination angle θ_{A} for the first flank 21A of the first thread forming profile 20A is different from, i.e. smaller than, the inclination angle θ_{B} for the first flank 21B of the second thread forming profile 20B. Similarly, the inclination angle γ_{B} for the second flank 22B of the second thread forming profile 20B is different from, i.e. smaller than, the inclination angle γ_{C} for the second flank 22C of the third thread forming profile 20C.

Preferably, the difference between the first angle α enclosed by the first thread groove 5A and the second angle β enclosed by the second thread groove 5B is arranged at one or more of the lobe portions 3. According to one embodiment the difference between the first angle α and the second angle β is provided only at one or more of the lobe portions 3 and, consequently, not at the relief portions 6. According to the embodiment illustrated in Fig. 1-4, the difference between the first angle α and the second angle β is provided only at all five lobe portions 3 and not at the relief portions 6. In other words, the flanks 21A, 22B of the first thread groove 5A enclose the first angle α only at the lobe portions 3. Thus, on both sides of the lobe portions 3, there is no difference between the angle enclosed by the flanks of a first thread groove and the angle enclosed by the flanks of an axially adjacent second thread groove. Consequently, the flanks 21A, 22B of the first thread groove 5A do not have the same inclination, or slope, at all circumferential positions. In the embodiment of Fig. 1-4, the flanks 21A, 22B of the first thread groove 5A run along helix-shaped paths and enclose an angle of 60° at the relief portions 6 and transitions along said helix-shaped paths into enclosing an angle α = 40° at selected surface areas 33,34 only at the circumferential position of the lobe portions 3.

According to one embodiment the difference between the first angle α and the second angle β is provided at the lobe portions 3 in an angular region, i.e. a region having an extension in the circumferential direction corresponding to an angle, which is no larger than 20°, each such angular region being centered around a lobe portion 3. According to another embodiment, the difference between the first angle α and the second angle β is provided at the lobe portions 3 in an angular region, i.e. a region having an extension in the circumferential direction corresponding to an angle, which is no larger than 10°, each such angular region being centered around a lobe portion 3.

With reference to Fig. 2, in the illustrated embodiment the difference between the first angle α and the second angle β is provided at the lobe portions 3 in an angular region of ω = 10°. With reference to Fig. 4, the difference between the first angle α and the second angle β centered around the lobe portions 3 is provided by selected surface areas 33, 34 of flanks of thread forming profiles 20. More specifically, a selected surface area 33 of a first flank 21A and a selected surface area 34 of a second flank 22B have an extension in the circumferential direction such that these selected surface areas 33, 34 together enclose an angle α = 40°, whereas other surface areas of the flanks 21A, 22B enclose an angle of 60°.

As illustrated in Fig. 3, the two flanks 21A, 22B of the first thread groove 5A have the same inclination, or slope, from the ridge 4 to the first thread groove 5A. Thus, the flanks 21A, 22B have the same inclination for the major part of the profile depth H1 of the first thread groove 5A. In other words, the flanks 21A, 22B are not divided into radial subsections having different inclination. This also means that the distance in the longitudinal direction, i.e. the axial distance, between the two adjacent flanks 21A, 22B of the first thread groove 5A decreases continuously, i.e. gradually, from the ridges 4 and radially inwards to the thread groove 5A. In other words, there is no stepwise change in the axial distance between the two adjacent flanks 21A, 22B. More specifically, in cross-section and as illustrated in Fig. 3, the first flank 21A of the first thread forming profile 20A is a straight line from transition point P1 to transition point P2. Transition point P1 is where the curved ridge 4 of the first thread forming profile 20A transitions to the straight first flank 21A of the first thread forming profile 20A. Transition point P2 is where the straight first flank 21A of the first thread forming profile 20A transitions to the curved first thread groove 5A. Similarly, in cross-section, the second flank 22B of the second thread forming profile 20B is a straight line from transition point P4 to transition point P3. Transition point P4 is where the curved ridge 4 of the second thread forming profile 20B transitions to the straight second flank 22B of the second thread forming profile 20B. Transition point P3 is where the straight second flank 22B of the second thread forming profile 20B transitions to curved first thread groove 5A.

Furthermore, the two flanks 21B, 22C of the second thread groove 5B have the same inclination, or slope, from the ridge 4 to the second thread groove 5B. Thus, the flanks 21B, 22C have the same inclination for the major part of the profile depth H2 of the second thread groove 5B. In other words, the flanks 21B, 22C are not divided into radial subsections having different inclination. This also means that the distance in the longitudinal direction, i.e. the axial distance, between the two adjacent flanks 21B, 22C of the second thread groove 5B decreases continuously, i.e. gradually, from the ridges 4 and radially inwards to the thread groove 5B. In other words, there is no stepwise change in the axial distance between the two adjacent flanks 21B, 22C. Accordingly, and similar to the above description relating to the flanks 21A, 22B of the first thread groove 5A, in cross-section, the first flank 21B of the second thread forming profile 20B is a straight line from transition point P5 to transition point P6. Transition point P5 is where the curved ridge 4 of the second thread forming profile 20B transitions to the straight first flank 21B of the second thread forming profile 20B. Transition point P6 is where the straight first flank 21B of the second thread forming profile 20B transitions to the curved second thread groove 5B. Similarly, in cross-section, the second flank 22C of the third thread forming profile 20C is a straight line from transition point P8 to transition point P7. Transition point P8 is where the curved ridge 4 of the third thread forming profile 20C transitions to the straight second flank 22C of the third thread forming profile 20C. Transition point P7 is where the straight second flank 22C of the third thread forming profile 20C transitions to curved second thread groove 5B.

As illustrated in Fig. 3, the profile depth H1 of the first thread groove 5A is larger than the profile depth H2 of the second thread groove 5B. Thus, the first thread groove 5A is deeper than the second thread groove 5B. In other words, the radial distance from the radially outermost part of ridge 4 of the first thread forming profile 20A to the bottom, i.e. the radially innermost part, of the first thread groove 5A is larger than the radial distance from the radially outermost part of ridge 4 of the second thread forming profile 20B to the bottom, i.e. the radially innermost part, of the second thread groove 5B. Preferably, this greater profile depth H1 of the first thread groove 5A is present at those circumferential positions, where the difference between the first angle α enclosed by the first thread groove 5A and the second angle β enclosed by the second thread groove 5B is arranged. Accordingly, for the embodiment shown in Figs. 1-3, the profile depth H1 is provided at all five lobe portions 3. According to another embodiment, not shown, the profile depth H1 of the first thread groove 5A is equal to the profile depth H2 of the second thread groove 5B.

Further, the axial distance S between adjacent ridges 4, or between adjacent thread grooves 5, is substantially constant along the full length of the thread forming portion 2, this axial distance corresponding to the thread pitch of the thread to be produced using the thread forming tool 10. Also, the axial distance S between adjacent ridges 4 is substantially constant in the circumferential direction, i.e. the axial distance S is the same at different circumferential positions.

While the thread forming portion 2 does not have a truly circular cross-section, an outer diameter of the thread forming portion 2 can be defined as twice the radius R at the lobe portions 3, see Fig. 2. According to the embodiment shown in Fig. 4, the outer diameter of the thread forming portion 2 is not constant along the full length of the thread forming portion 2. In other words, all ridges 4 along the length of the thread forming portion 2 are not arranged at equal radial distances from the common axis 50. As shown in Fig. 4, the thread forming portion 2 has in its longitudinal direction a forward end section 31 and a rear section 32. The forward end section 31 extends a minor part of the full length of the thread forming portion 2, whereas the rear section 32 extends a major part of the full length of the thread forming portion 2. The number of thread forming profiles 20 in the respective section can be configured based on user requirements. The forward end section may comprise only a few thread forming profiles, such as for example two, three or four thread forming profiles in the longitudinal direction. In the illustrated embodiment, the forward end section 31 comprises four thread forming profiles 20 and three thread grooves 5 in the longitudinal direction, whereas the rear section 32 has eleven thread grooves 5 arranged between twelve thread forming profiles 20.

The outer diameter of the forward end section 31 is different from the outer diameter of the rear section 32. The forward end section 31 has a tapering shape, i.e. the ridges 4 are arranged so that the outer diameter of this tapering forward end section decreases towards the forward free end 7 of the tool 10. Such a tapering forward end section is normally called a lead chamfer. The tapering shape of the forward end section is indicated in Fig. 4 by means of an inclined plane 52, which is non-parallel with the axis 50 and includes the ridges 4 of the four forwardmost thread forming profiles 20. As shown in Fig. 4 the tapering forward end section 31 transitions, at a transition ridge 4T at the rear end of the forward end section 31, into the rear section 32. In the illustrated embodiment, the transition ridge 4T is the ridge of the fourth thread forming profile 20 from the forward end 7. The ridges 4 of all, but not the last, i.e. rearwardmost, of the thread forming profiles 20 of the rear section 32 are arranged at equal radial distances from the common axis 50. Thus, the outer diameter is constant for the major part of the length of the rear section 32. The constant outer diameter is indicated in Fig. 4 by means of a plane 51, which is parallel with the axis 50 and includes the ridges 4 of the fourth to the fourteenth thread forming profiles 20, as counted from the forward end 7. The constant outer diameter of the rear section 32 can also be seen in Fig. 3, where the ridges 4 of all three thread forming profiles 20A, 20B, 20C are located at equal radial distances from the common axis 50. The rear section 32 ends and transitions to the shank 1 at the fifteenth, rearwardmost thread forming profile 20. As shown in Fig. 4, the rearwardmost thread forming profile 20 is not a complete profile, but only has one forward-facing flank 22. Further, the ridge 4 of the last thread forming profile is located at a shorter radial distance from the axis 50 than the other ridges of the rear section 32.

According to the embodiment in Fig. 1-4, the thread forming tool 10 is provided with a first set of thread grooves 5, having a plurality of first thread grooves 5A, and a second set of thread grooves 5, having a plurality of second thread grooves 5B. The first thread grooves 5A are longitudinally evenly distributed along the full length of the thread forming portion 2. In other words, the axial distance between two neighbouring first thread grooves 5A is substantially constant along the full length of the thread forming portion. In the embodiment illustrated in Fig.4, this is achieved by arranging the first thread grooves 5A such that every second groove is a first thread groove 5A. Between two first thread grooves 5A, a second thread groove 5B is arranged. Thus, the first thread grooves 5A and the second thread grooves 5B are alternatingly arranged such that also every second groove is a second thread groove 5B. Consequently, in this embodiment, the thread forming portion 2 only includes first thread grooves 5A and second thread grooves 5B. In detail, as illustrated in Fig. 4, starting at the front end 7 and travelling rearwards along straight path 53, the upper lobe portion 3 is provided with first a thread forming profile 20, after which a second thread groove 5B is provided followed by a thread forming profile 20, which in turn is followed by a first thread groove 5A. In this way first thread grooves 5A and second thread grooves 5B alternate along the full length of the thread forming portion 2 such that the thread forming portion ends with a first thread groove 5A and a thread forming profile 20. In total seven first thread grooves 5A and seven second thread grooves 5B are arranged at the lobe portion 3 indicated at path 53.

Similarly, starting at the front end 7 and travelling rearwards along straight path 54, the lower lobe portion 3 is provided with first a thread forming profile 20, after which a first thread groove 5A is provided followed by a thread forming profile 20, which in turn is followed by a second thread groove 5B. In this way first thread grooves 5A and second thread grooves 5B alternate along the full length of the thread forming portion 2 such that the thread forming portion ends with a second thread groove 5B and a thread forming profile 20. In total seven first thread grooves 5A and seven second thread grooves 5B are arranged at the lobe portion 3 indicated at path 54.

All five lobe portions 3 of the thread forming tool are similarly configured with first thread grooves 5A and second thread grooves 5B alternating along the full length of the thread forming portion 2, such that every second groove is a first thread groove 5A.

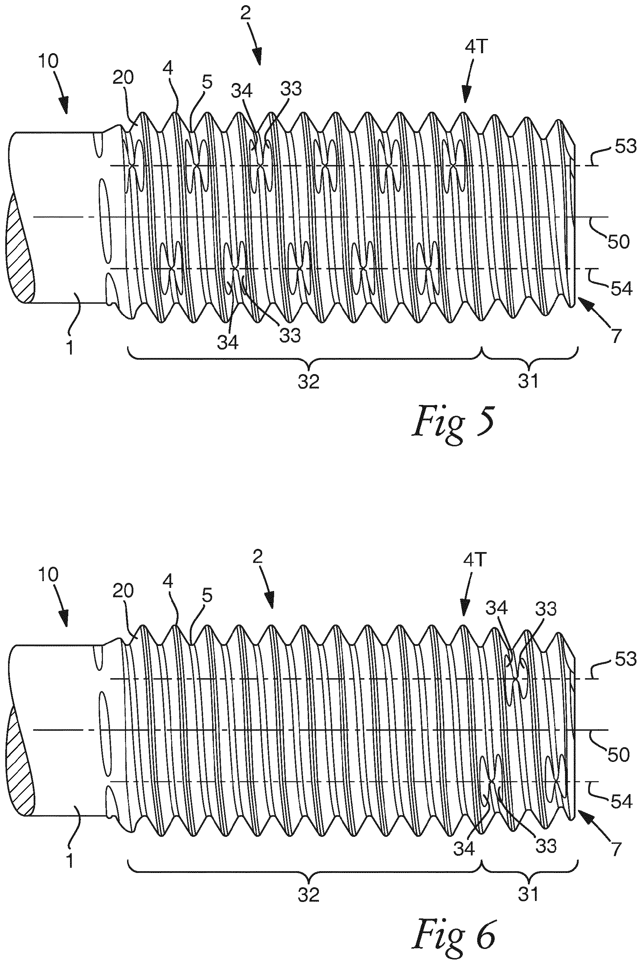

In Fig. 5 a second embodiment of a thread forming tool 10 is illustrated. Same reference numerals designate the same features, as for the embodiment described above with reference to Fig. 1-4. The thread forming tool 10 in Fig. 5 differs from the embodiment in Fig. 4 only in the arrangement of the first thread grooves 5A. More specifically, the first thread grooves 5A are arranged only at the longitudinally rear section 32 of the thread forming portion 2, while no first thread grooves 5A are arranged in the forward end section 31 of the thread forming portion 2.

Accordingly, the thread forming tool 10 in Fig. 5 is configured such that the tapering forward end section 31 comprises four thread forming profiles and three thread grooves 5 in the longitudinal direction, while the rear section 32 has eleven thread grooves 5 arranged between twelve thread forming profiles. Further, the thread forming tool 10 in Fig. 5 is provided with a first set of thread grooves 5, having a plurality of first thread grooves 5A, and a second set of thread grooves 5, having a plurality of second thread grooves 5B. The first thread grooves 5A are longitudinally evenly distributed along the rear section 32, which is a major part of the thread forming portion 2 in the longitudinal direction. Thus, the axial distance between two neighbouring first thread grooves 5A is substantially constant along a major part of the thread forming portion 2, i.e. along the rear section 32. In the embodiment illustrated in Fig. 5, this is achieved by arranging the first thread grooves 5A such that in the rear section 32 every second groove is a first thread groove 5A. Between two first thread grooves 5A, a second thread groove 5B is arranged. Thus, in the rear section 32 the first thread grooves 5A and the second thread grooves 5B are alternatingly arranged such that also every second groove is a second thread groove 5B. Consequently, in this embodiment, the rear section 32 only includes first thread grooves 5A and second thread grooves 5B. The tapering forward end section 31 only includes second thread grooves 5B.

In detail, as illustrated in Fig. 5, starting at the front end 7 and travelling rearwards along straight path 53, the upper lobe portion 3 is provided with first a thread forming profile 20, after which a second thread groove 5B is provided followed by a thread forming profile 20, which in turn is followed by another second thread groove 5B. In this way thread forming profiles 20 and second thread grooves 5B alternate along the full length of the tapering forward end section 31. As shown in Fig. 5 the tapering forward end section 31 transitions, at a transition ridge 4T at the rear end of the forward end section 31, into the rear section 32. In the illustrated embodiment, the transition ridge 4T is the ridge of the fourth thread forming profile 20 from the forward end 7. Still travelling rearwards along straight path 53, a first thread groove 5A is provided following the transition ridge 4T. Subsequent to this first thread groove 5A, another thread forming profile 20 is arranged, followed by a second thread groove 5B, which in turn is followed by a thread forming profile 20 and subsequently another first thread groove 5A. In this way first thread grooves 5A and second thread grooves 5B alternate along the full length of the rear section 32 such that the thread forming portion ends with a first thread groove 5A and a thread forming profile 20. At the lobe portion 3 indicated at path 53 in total six first thread grooves 5A and five second thread grooves 5B are alternately arranged at the rear section 32, whereas three second thread grooves 5B are arranged at the tapering forward end section 31.

Similarly, starting at the front end 7 and travelling rearwards along straight path 54, the lower lobe portion 3 is provided with first a thread forming profile 20, after which a second thread groove 5B is provided followed by a thread forming profile 20, which in turn is followed by another second thread groove 5B. In this way thread forming profiles 20 and second thread grooves 5B alternate along the full length of the tapering forward end section 31 to the transition ridge 4T at the rear end of the forward end section 31. Still travelling rearwards along the straight path 54, a second thread groove 5B is provided following the transition ridge 4T. Subsequent to this second thread groove 5B, another thread forming profile 20 is arranged, followed by a first thread groove 5A, which in turn is followed by a thread forming profile 20 and subsequently another second thread groove 5B. In this way first thread grooves 5A and second thread grooves 5B alternate along the full length of the rear section 32 such that the thread forming portion ends with a second thread groove 5B and a thread forming profile 20. At the lobe portion 3 indicated at path 54 in total five first thread grooves 5A and six second thread grooves 5B are alternately arranged at the rear section 32, whereas three second thread grooves 5B are arranged at the tapering forward end section 31.

All five lobe portions 3 of the thread forming tool 10 are similarly configured with first thread grooves 5A and second thread grooves 5B alternating along the full length of the rear section 32 of the thread forming portion 2, such that every second groove is a first thread groove 5A, while the forward end section 31 has only second thread grooves 5B.

In Fig. 6 a third embodiment of a thread forming tool 10 is illustrated. Same reference numerals designate the same features, as for the embodiment described above with reference to Fig. 1-4. The thread forming tool 10 in Fig. 6 differs from the embodiment in Fig. 4 only in the arrangement of the first thread grooves 5A. More specifically, the first thread grooves 5A are only arranged at the longitudinally forward end section 31 of the thread forming portion 2, while no first thread grooves 5A are arranged in the rear section 32 of the thread forming portion 2.

Accordingly, the thread forming tool 10 in Fig. 6 is configured such that the tapering forward end section 31 comprises four thread forming profiles and three thread grooves 5 in the longitudinal direction, while the rear section 32 has eleven thread grooves 5 arranged between twelve thread forming profiles. Further, the thread forming tool 10 in Fig. 6 is provided with a first set of thread grooves 5, having a plurality of first thread grooves 5A, and a second set of thread grooves 5, having a plurality of second thread grooves 5B. The first thread grooves 5A are longitudinally evenly distributed along the forward end section 31, which is a minor part of the thread forming portion 2 in the longitudinal direction. Thus, the axial distance between two neighbouring first thread grooves 5A is substantially constant along a minor part of the thread forming portion 2, i.e. along the forward end section 31. In the embodiment illustrated in Fig. 6, this is achieved by arranging the first thread grooves 5A such that in the forward end section 31 every second groove is a first thread groove 5A. Between two first thread grooves 5A, a second thread groove 5B is arranged. Thus, in the forward end section 31 the first thread grooves 5A and the second thread grooves 5B are alternatingly arranged such that also every second groove is a second thread groove 5B. Consequently, in this embodiment, the forward end section 31 only includes first thread grooves 5A and second thread grooves 5B. The rear section 32 only includes second thread grooves 5B.

In detail, as illustrated in Fig. 6, starting at the front end 7 and travelling rearwards along straight path 53, the upper lobe portion 3 is provided with first a thread forming profile 20, after which a second thread groove 5B is provided followed by a thread forming profile 20, which in turn is followed by a first thread groove 5A. Subsequent thereto, a thread forming profile 20 is provided followed by another second thread groove 5B and then a thread forming profile 20, which has a transition ridge 4T, at which the forward end section 31 transitions into the rear section 32. Thus, the transition ridge 4T is the ridge of the fourth thread forming profile 20 from the forward end 7. Still travelling rearwards along straight path 53, a second thread groove 5B is provided following the transition ridge 4T. Subsequent to this second thread groove 5B, another thread forming profile 20 is arranged, followed by another second thread groove 5B, which in turn is followed by a thread forming profile 20. In this way thread forming profiles 20 and second thread grooves 5B alternate along the full length of the rear section 32 such that the thread forming portion ends with a second thread groove 5B and a thread forming profile 20. At the lobe portion 3 indicated at path 53 in total one first thread groove 5A and two second thread grooves 5B are alternately arranged at the forward end section 31, whereas eleven second thread grooves 5B are arranged at the rear section 32.

Similarly, starting at the front end 7 and travelling rearwards along straight path 54, the lower lobe portion 3 is provided with first a thread forming profile 20, after which a first thread groove 5A is provided followed by a thread forming profile 20, which in turn is followed by a second thread groove 5B. Subsequent thereto, a thread forming profile 20 is provided followed by another first thread groove 5A and then a thread forming profile 20, which has a transition ridge 4T, at which the forward end section 31 transitions into the rear section 32. Thus, the transition ridge 4T is the ridge of the fourth thread forming profile 20 from the forward end 7. Still travelling rearwards along straight path 54, a second thread groove 5B is provided following the transition ridge 4T. Subsequent to this second thread groove 5B, another thread forming profile 20 is arranged, followed by another second thread groove 5B, which in turn is followed by a thread forming profile 20. In this way thread forming profiles 20 and second thread grooves 5B alternate along the full length of the rear section 32 such that the thread forming portion ends with a second thread groove 5B and a thread forming profile 20. At the lobe portion 3 indicated at path 54 in total two first thread grooves 5A and one second thread groove 5B are alternately arranged at the forward end section 31, whereas eleven second thread grooves 5B are arranged at the rear section 32.

All five lobe portions 3 of the thread forming tool 10 are similarly configured with first thread grooves 5A and second thread grooves 5B alternating along the full length of the tapering forward end section 31 of the thread forming portion 2, such that every second groove is a first thread groove 5A, while the rear section 32 has only second thread grooves 5B.

The dimensions of any of the thread forming tools described above can be configured based on user requirements. For example, the total length L of the thread forming tool may be 40 mm or larger, but normally not larger than 300 mm. Examples of diameters d of the shank include diameters from 1 mm to 36 mm. Further, the relationship between shank diameter d and total length L is preferably configured such that L/d is at least 5 but not more than 40.

According to another aspect, the process of forming an internal thread in a metal workpiece without any material-removing action using a thread forming tool according to any of the embodiments described above comprises the steps of
- inserting the tool with its forward end into an already existing bore of a metal workpiece, while rotating the tool around its central axis,
- moving the tool axially forwardly, thereby pressing the thread forming profiles into the surface of the workpiece, causing a re-shaping or deformation of the workpiece material so that a thread is formed in the surface of the bore.

In one example, the already existing bore does not have any initial thread formed in the surface of the bore. However, the process may also be used for finishing a previously created initial thread.

Further, according to another aspect, a method of producing a thread forming tool according to any of the embodiments described above comprises the steps of
a) providing a bar-like blank,
b) installing a grinding tool in a grinding machine, the grinding tool being rotatable around an axis of rotation,
c) positioning and securing said blank in the grinding machine, and in a first grinding operation producing thread forming profiles and second thread grooves by
d) rotating the grinding tool around the axis of rotation,
e) engaging the grinding tool with the blank,
f) mutually moving the grinding tool and the blank,
g) disengaging the grinding tool from the blank,
h) optionally, repeating steps e), f) and g),
   and in a second grinding operation producing first thread grooves by
i) rotating the grinding tool around the axis of rotation,
j) engaging the grinding tool with the blank at selected surface areas of flanks of thread forming profiles produced in the first grinding operation,
k) disengaging the grinding tool from the blank.

Preferably, in the second grinding operation the selected surface areas in step j) are arranged at one or more of the lobe portions 3. According to one example, the selected surface areas in step j) are provided only at one or more of the lobe portions 3 and, consequently, not at the relief portions 6. According to one example, for producing a thread forming tool according to the embodiment illustrated in Fig. 1-4, the selected surface areas in step j) are arranged only at all five lobe portions 3 and not at the relief portions 6.

According to one example, the method additionally includes the step of exchanging the grinding tool used in the first grinding operation to another grinding tool, before starting the second grinding operation, i.e. before step i).

According to one example, the method involves in the second grinding operation simultaneously grinding a first flank 21A of a first thread forming profile 20A and a second flank 22B of an adjacent second thread forming profile 20B. According to another example the method additionally also involves in the second grinding operation simultaneously grinding the thread groove 5A.

The invention is not limited to the embodiments disclosed, but may be varied and modified within the scope of the following claims.

For example, although the first thread grooves in the embodiments illustrated in Fig. 1-6 have been arranged longitudinally evenly distributed, such that every second groove is a first thread groove, positive effects have been observed also for other arrangements of even distribution of the first thread grooves in the longitudinal direction, such as every third or every fourth thread groove being a first thread groove, whose flanks enclose a smaller angle than the angle enclosed by the flanks of the second thread grooves. Furthermore, a non-even distribution of the first thread grooves in the longitudinal direction is also possible. For example, the forward end section may be arranged with every second groove being a first thread groove, whereas in the rear section every third groove is a first thread groove.

## Claims

1. A thread forming tool (10) for forming an internal thread in a metal workpiece, the thread forming tool comprising:
a shank (1) and a thread forming portion (2), which are rotatable around a common axis (50), said axis extending in a longitudinal direction of the thread forming tool (10),
the thread forming portion (2) having a plurality of radially protruding lobe portions (3) being circumferentially spaced-apart by relief portions (6),
said lobe portions (3) having in the longitudinal direction a plurality of thread forming profiles (20),
each thread forming profile (20) having a radially outermost ridge (4), being connected to a first flank (21) and a second flank (22), wherein a first flank (21) of a first thread forming profile (20) is connected to a second flank (22) of an adjacent second thread forming profile (20) via a thread groove (5),
said lobe portions (3) having in the longitudinal direction a plurality of thread grooves (5),
**characterized in that**
the flanks (21A, 22B) of at least one first thread groove (5A) encloses a first angle (a), which is smaller than a second angle (β) enclosed by the flanks (21B, 22C) of at least one second thread groove (5B).

2. A thread forming tool according to claim 1, **characterized in that** said first angle (α) is at least 10° smaller than said second angle (β).

3. A thread forming tool according to claim 2, **characterized in that** said first angle (α) is at least 20° smaller than said second angle (β).

4. A thread forming tool according to claim 1 or 2, **characterized in that** the flanks (21A, 22B) of said at least one first thread groove (5A) are inclined at equal angles (θ_{A},γ_{B}).

5. A thread forming tool according to any of the preceding claims, **characterized in that** the profile depth (H1) of said at least one first thread groove (5A) is larger than the profile depth (H2) of the at least one second thread groove (5B).

6. A thread forming tool according to any of the preceding claims, **characterized in that** a first set of thread grooves (5), having a plurality of first thread grooves (5A), and a second set of thread grooves (5), having a plurality of second thread grooves (5B), are arranged.

7. A thread forming tool according to claim 6, **characterized in that** the first thread grooves (5A) are longitudinally evenly distributed along at least a part of the thread forming portion (2).

8. A thread forming tool according to claim 7, **characterized in that** the first thread grooves (5A) are longitudinally evenly distributed along a major part of the thread forming portion (2).

9. A thread forming tool according to claim 7 or 8, **characterized in that** the first thread grooves (5A) are arranged at a longitudinally forward end section (31) of the thread forming portion (2).

10. A thread forming tool according to claim 7 or 8, **characterized in that** the first thread grooves (5A) are arranged at a longitudinally rear section (32) of the thread forming portion (2).

11. A thread forming tool according to claim 8, **characterized in that** the first thread grooves (5A) are longitudinally evenly distributed along the full length of the thread forming portion (2).

12. A thread forming tool according to any of the claims 7-11, **characterized in that** the first thread grooves (5A) are longitudinally evenly distributed such that every second groove is a first thread groove (5A).

13. A thread forming tool according to any of the preceding claims, **characterized in that** at least five or more thread forming profiles (20) and thread grooves (5) are arranged at each lobe portion (3).

14. A thread forming tool according to claim 13, **characterized in that** at least ten or more thread forming profiles (20) and thread grooves (5) are arranged at each lobe portion (3).

15. A thread forming tool according to any of the preceding claims, **characterized in that** adjacent thread forming lobe portions (3) and associated relief portions (6) are circumferentially spaced-apart at equal angles.

16. A thread forming tool according to any of the preceding claims, **characterized in that** the thread forming profiles (20) and thread grooves (5) are arranged along helix-shaped paths around the common axis (50).

## Patentansprüche

1. Gewindeformwerkzeug (10) zum Formen eines Innengewindes in einem Metallwerkstück, wobei das Gewindeformwerkzeug Folgendes aufweist:
einen Schaft (1) und einen gewindeformenden Bereich (2), die um eine gemeinsame Achse (50) rotierbar sind, wobei sich die Achse in einer Längsrichtung des Gewindeformwerkzeuges (10) erstreckt,
wobei der gewindeformenden Bereich (2) eine Mehrzahl von sich radial erstreckenden exzentrischen Bereichen (3) aufweist, die in Umfangsrichtung durch ausgesparte Bereiche (6) beabstandet sind,
wobei die exzentrischen Bereiche (3) in der Längsrichtung eine Mehrzahl an gewindeformenden Profilen (20) aufweisen,
wobei jedes gewindeformende Profil (20) in radialer Richtung einen äußersten Grat (4) aufweist, der mit einer ersten Flanke (21) und einer zweiten Flanke (22) verbunden ist,
wobei eine erste Flanke (21) eines ersten gewindeformenden Profils (20) mit einer zweiten Flanke (22) des benachbarten zweiten gewindeformenden Profils (20) über eine Gewindenut (5) verbunden ist,
wobei die exzentrischen Bereiche (3) in der Längsrichtung eine Mehrzahl von Gewindenuten (5) aufweisen,
**dadurch gekennzeichnet, dass**
die Flanken (21A, 22B) von wenigstens einer ersten Gewindenut (5A) einen ersten Winkel (α) bilden, der kleiner ist als ein zweiter Winkel (β), der von den Flanken (21B, 22C) von wenigstens einer zweiten Gewindenut (5B) gebildet wird.

2. Gewindeformwerkzeug nach Anspruch 1, **dadurch gekennzeichnet, dass** der erste Winkel (α) wenigstens 10° kleiner ist als der zweite Winkel (β).

3. Gewindeformwerkzeug nach Anspruch 2, **dadurch gekennzeichnet, dass** der erste Winkel (α) wenigstens 20° kleiner ist als der zweite Winkel (β).

4. Gewindeformwerkzeug nach Anspruch 1 oder 2, **dadurch gekennzeichnet, dass** die Flanken (21A, 22B) der wenigstens einen ersten Gewindenut (5A) eine Steigung mit den gleichen Winken (θ_{A}, γ_{B}) aufweisen.

5. Gewindeformwerkzeug nach einem der vorangehenden Ansprüche, **dadurch gekennzeichnet, dass** die Profiltiefe (H1) der wenigstens einen ersten Gewindenut (5A) größer ist als die Profiltiefe (H2) der wenigstens einen zweiten Gewindenut (5B).

6. Gewindeformwerkzeug nach einem der vorangehenden Ansprüche, **dadurch gekennzeichnet, dass** daran ein erster Satz an Gewindenuten (5), der eine Mehrzahl an ersten Gewindenuten (5A) aufweist, und ein zweiter Satz an Gewindenuten (5), der eine Mehrzahl an zweiten Gewindenuten (5B) aufweist, angeordnet sind.

7. Gewindeformwerkzeug nach Anspruch 6, **dadurch gekennzeichnet, dass** die ersten Gewindenuten (5) in Längsrichtung gleichmäßig über wenigstens einen Teil des gewindeformenden Bereichs (2) verteilt sind.

8. Gewindeformwerkzeug nach Anspruch 7, **dadurch gekennzeichnet, dass** die ersten Gewindenuten (5) in Längsrichtung gleichmäßig über wenigstens einen größten Teil des gewindeformenden Bereichs (2) verteilt sind.

9. Gewindeformwerkzeug nach Anspruch 7 oder 8, **dadurch gekennzeichnet, dass** die ersten Gewindenuten (5A) in einer Längsrichtung am vorderen Endabschnitt (31) des gewindeformenden Bereichs (2) angeordnet sind.

10. Gewindeformwerkzeug nach Anspruch 7 oder 8, **dadurch gekennzeichnet, dass** die ersten Gewindenuten (5A) in einer Längsrichtung am hinteren Abschnitt (32) des gewindeformenden Bereichs (2) angeordnet sind.

11. Gewindeformwerkzeug nach Anspruch 8, **dadurch gekennzeichnet, dass** die ersten Gewindenuten (5A) in Längsrichtung über die gesamte Länge des gewindeformenden Bereichs (2) gleichmäßig verteilt sind.

12. Gewindeformwerkzeug nach einem der Ansprüche 7-11, **dadurch gekennzeichnet, dass** die ersten Gewindenuten (5A) in Längsrichtung so gleichmäßig verteilt sind, dass jede zweite Nut eine erste Gewindenut (5A) ist.

13. Gewindeformwerkzeug nach einem der vorangehenden Ansprüche, **dadurch gekennzeichnet, dass** in jedem exzentrischen Bereich (3) wenigstens fünf oder mehr gewindeformende Profile (20) und Gewindenuten (5) angeordnet sind.

14. Gewindeformwerkzeug nach Anspruch 13, **dadurch gekennzeichnet, dass** in jedem exzentrischen Bereich (3) wenigstens zehn oder mehr gewindeformende Profile (20) und Gewindenuten (5) angeordnet sind.

15. Gewindeformwerkzeug nach einem der vorangehenden Ansprüche, **dadurch gekennzeichnet, dass** benachbarte gewindeformende exzentrische Bereiche (3) und dazugehörige ausgesparte Bereiche (6) in Umfangsrichtung in gleichen Winkeln voneinander beabstandet sind.

16. Gewindeformwerkzeug nach einem der vorangehenden Ansprüche, **dadurch gekennzeichnet, dass** die gewindeformenden Profile (20) und die Gewindenuten (5) entlang helixförmiger Bahnen um die gemeinsame Achse (50) angeordnet sind.

## Revendications

1. Outil de taraudage (10) destiné à former un filetage intérieur dans une pièce d'ouvrage métallique, l'outil de taraudage comprenant :
une queue (1) et une portion de taraudage (2), lesquelles peuvent être entraînées en rotation autour d'un axe commun (50), ledit axe s'étendant dans une direction longitudinale de l'outil de taraudage (10),
la portion de taraudage (2) présentant une pluralité de portions de lobe faisant saillie de manière radiale (3) qui sont séparées circonférentiellement par des portions en retrait (6),
lesdites portions de lobe (3) présentant dans la direction longitudinale une pluralité de profils de taraudage (20),
chaque profil de taraudage (20) présentant une nervure radialement la plus à l'extérieur (4) qui est reliée à un premier flanc (21) et à un second flanc (22), où un premier flanc (21) d'un premier profil de taraudage (20) est relié à un second flanc (22) d'un second profil de taraudage adjacent (20) via une rainure de filetage (5),
lesdites portions de lobe (3) présentant dans la direction longitudinale une pluralité de rainures de filetage (5),
**caractérisé en ce que**
les flancs (21A, 22B) d'au moins une première rainure de filetage (5A) décrivent une premier angle (α), lequel est inférieur à un second angle (β) décrit par les flancs (21B, 22C) d'au moins une seconde rainure de filetage (5B).

2. Outil de taraudage selon la revendication 1, **caractérisé en ce que** ledit premier angle (α) est inférieur d'au moins 10° audit second angle (β).

3. Outil de taraudage selon la revendication 2, **caractérisé en ce que** ledit premier angle (α) est inférieur d'au moins 20° audit second angle (β).

4. Outil de taraudage selon la revendication 1 ou 2, **caractérisé en ce que** les flancs (21A, 22B) de ladite au moins une première rainure de filetage (5A) sont inclinés à des angles égaux (θ_{A}, γ_{B}).

5. Outil de taraudage selon l'une quelconque des revendications précédentes, **caractérisé en ce que** la profondeur de profil (H1) de ladite au moins une première rainure de filetage (5A) est supérieure à la profondeur de profil (H2) de ladite au moins une seconde rainure de filetage (5B).

6. Outil de taraudage selon l'une quelconque des revendications précédentes, **caractérisé en ce qu'**un premier ensemble de rainures de filetage (5), présentant une pluralité de premières rainures de filetage (5A), et un second ensemble de rainures de filetage (5), présentant une pluralité de secondes rainures de filetage (5B), sont agencés.

7. Outil de taraudage selon la revendication 6, **caractérisé en ce que** les premières rainures de filetage (5A) sont longitudinalement réparties de manière régulière le long d'au moins une partie de la portion de taraudage (2).

8. Outil de taraudage selon la revendication 7, **caractérisé en ce que** les premières rainures de filetage (5A) sont longitudinalement réparties de manière régulière le long d'une majeure partie de la portion de taraudage (2).

9. Outil de taraudage selon la revendication 7 ou 8, **caractérisé en ce que** les premières rainures de filetage (5A) sont agencées au niveau d'une section terminale longitudinalement avant (31) de la portion de taraudage (2).

10. Outil de taraudage selon la revendication 7 ou 8, **caractérisé en ce que** les premières rainures de filetage (5A) sont agencées au niveau d'une section longitudinalement arrière (32) de la portion de taraudage (2).

11. Outil de taraudage selon la revendication 8, **caractérisé en ce que** les premières rainures de filetage (5A) sont longitudinalement réparties de manière régulière sur toute la longueur de la portion de taraudage (2).

12. Outil de taraudage selon l'une quelconque des revendications 7 à 11, **caractérisé en ce que** les premières rainures de filetage (5A) sont longitudinalement réparties de manière régulière de telle sorte que chaque seconde rainure est une première rainure de filetage (5A).

13. Outil de taraudage selon l'une quelconque des revendications précédentes, **caractérisé en ce que** au moins cinq profils de taraudage (20) et rainures de filetage (5) ou plus sont agencés au niveau de chaque portion de lobe (3).

14. Outil de taraudage selon la revendication 13, **caractérisé en ce que** au moins dix profils de taraudage (20) et rainures de filetage (5) ou plus sont agencés au niveau de chaque portion de lobe (3).

15. Outil de taraudage selon l'une quelconque des revendications précédentes, **caractérisé en ce que** des portions de lobe de taraudage adjacentes (3) et parties en retrait associées (6) sont séparées circonférentiellement à des angles égaux.

16. Outil de taraudage selon l'une quelconque des revendications précédentes, **caractérisé en ce que** les profils de taraudage (20) et rainures de filetage (5) sont agencés le long de trajectoires hélicoïdales autour de l'axe commun (50).
